# FASCICULE DE BREVET EUROPEEN

(11) **EP 3 970 577 B1**
(45) Date de publication et mention de la délivrance du brevet: **26.04.2023**
(21) Numéro de dépôt: 21195659.4
(22) Date de dépôt: 09.09.2021
(51) Int. Cl.: A47J 31/42, A47J 42/08, A47J 42/44

(54) **MACHINE À CAFÉ AUTOMATIQUE MUNIE D'UN DISPOSITIF DE RÉGLAGE D'UN BROYEUR**
AUTOMATISCHE KAFFEEMASCHINE MIT EINER VORRICHTUNG ZUR EINSTELLUNG EINER MÜHLE
AUTOMATIC COFFEE MACHINE EQUIPPED WITH A DEVICE FOR ADJUSTING A GRINDER

(30) Priorité: 17.09.2020 FR 2009439
(43) Date de publication de la demande: 23.03.2022
(73) Titulaire: SEB S.A., 69130 Ecully (FR)
(72) Inventeur: DUTERTRE, Thierry, 61000 SAINT-GERMAIN-DU-CORBEIS (FR); LAMBALLE, Alexandre, 53100 MAYENNE (FR); BICHET, Fabrice, 53100 MAYENNE (FR); DUTRUEL, Laurent, 30250 SOMMIERES (FR)
(74) Mandataire: SEB Développement

(56) Documents cités:
- IT-A1- MI20 100 728
- US-A1- 2016 220 067
- US-A1- 2020 187 706

## Description

La présente invention se rapporte au domaine technique général des machines à café automatiques comportant un broyeur conçu pour moudre les grains de café selon différentes granulométries afin de permettre la préparation de différents types boissons à base de café, par exemple un espresso, un ristretto ou un café long.

Il est connu des documents EP3424375, ITMI20100728 et US2020187706, une machine à café automatique comprenant un broyeur de grains de café comportant des première et seconde meules dont l'une est mobile en rotation autour d'un axe Δ par rapport à l'autre et un dispositif de réglage de l'espacement entre les première et seconde meules le long de l'axe Δ du type vis/écrou. Le dispositif de réglage comporte une couronne mobile le long de l'axe Δ entre une position serrée dans laquelle les première et seconde meules présentent un espacement faible pour produire une mouture d'une granulométrie fine et une position espacée dans laquelle les première et seconde meules présentent un espacement important pour produire une mouture d'une granulométrie grossière.

Dans le document EP3424375, le dispositif de réglage comporte un moto réducteur permettant d'entrainer la couronne mobile pour la déplacer entre la position serrée et la position espacée ou réciproquement. Ainsi, une telle construction est chère et peut entrainer des problèmes de fiabilité liés à des possibles défaillances du moto réducteur.

De plus, le dispositif de réglage alimente le moteur du moto réducteur pendant un temps donné pour atteindre une position intermédiaire entre la position serrée et la position espacée. Un tel procédé de fonctionnement ne permet pas de garantir la précision de la position intermédiaire, donc de garantir la production d'une mouture de granulométrie demandée.

Le but de la présente invention est de remédier aux inconvénients précités et de proposer une machine à café automatique qui présente une conception simple et qui soit économique à mettre en oeuvre tout en garantissant une bonne granulométrie pour la mouture de café produite.

Un autre but de la présente invention est de proposer une machine à café automatique qui présente une mise en oeuvre simple et ergonomique.

Ces buts sont atteints avec une machine à café automatique comprenant un broyeur de grains de café comportant des première et seconde meules dont l'une est mobile en rotation autour d'un axe Δ par rapport à l'autre et un dispositif de réglage de l'espacement entre les première et seconde meules le long de l'axe Δ du type vis/écrou, ledit dispositif de réglage comportant une couronne mobile le long de l'axe Δ entre une position serrée dans laquelle les première et seconde meules présentent un espacement faible pour produire une mouture d'une granulométrie fine et une position espacée dans laquelle les première et seconde meules présentent un espacement important pour produire une mouture d'une granulométrie grossière, caractérisée en ce que la couronne mobile présente une périphérie divisée angulairement en des premier et deuxième secteurs, le premier secteur comportant un levier manoeuvré manuellement et destiné à mettre en rotation la couronne mobile pour régler l'espacement entre les première et seconde meules et le deuxième secteur comportant un dispositif d'entrainement d'un système de mesure de la position de la couronne mobile entre la position serrée et la position espacée.

Par mesure de la position de la couronne mobile, on comprend que la détermination de la position de la couronne mobile permet de connaitre l'espacement entre les première et seconde meules, donc la granulométrie de la mouture réalisée par le broyeur.

Par couronne mobile le long de l'axe Δ, on comprend que la couronne est mobile en rotation autour de l'axe Δ pour induire un déplacement de la couronne le long de l'axe Δ entre la position serrée et la position espacée.

Ainsi, deux fonctions sont agencées sur la périphérie de la couronne mobile : une fonction de mise en rotation de la couronne mobile particulièrement simple et économique et une fonction de mesure de la positon de couronne mobile pour connaitre la granulométrie de la mouture réalisée par le broyeur.

Le dispositif d'entrainement d'un système de mesure de la position de la couronne mobile est agencé en prise directe sur la périphérie de la couronne mobile. Une telle disposition garantit la précision de la mesure.

Avantageusement, le dispositif d'entrainement comporte un secteur denté qui coopère avec un pignon denté.

Un secteur denté qui coopère avec un pignon denté est un système positif d'entrainement particulièrement simple et économique.

De préférence, le secteur denté s'étend sur au moins 30°.

Ainsi, le secteur denté s'étend avec une amplitude suffisante pour obtenir une bonne précision dans la mesure de l'espacement entre les première et seconde meules

Avantageusement, le système de mesure comporte un potentiomètre.

On comprend que le potentiomètre est un potentiomètre rotatif dont un axe est entrainé par le pignon denté. La course du potentiomètre peut être découpée finement pour obtenir un nombre important de positions intermédiaires représentatives de la granulométrie entre la position serrée et la position espacée.

De préférence, la machine à café automatique comporte une paroi supérieure comportant une ouverture d'un bac à grains de café et un bouton d'entrainement d'une extrémité libre du levier, le bouton d'entrainement étant agencé à proximité de l'ouverture.

Ainsi, l'ouverture qui permet de remplir le bac à grains et le bouton d'entrainement sont regroupés pour faciliter l'utilisation de la machine.

De manière avantageuse, le levier s'étend sous le bac à grains jusqu'à un bord de l'ouverture.

De manière avantageuse, le bac à grains comporte un couvercle amovible qui recouvre l'ouverture.

Avantageusement, le bouton d'entrainement est mobile en translation.

Dans le cas où l'ouverture et le couvercle du bac à grain sont rectangulaires, le bouton d'entrainement peut être agencé en translation le long d'un côté de l'ouverture ou du couvercle.

De manière avantageuse, la machine à café automatique comporte une règle graduée agencée le long de la course du bouton d'entrainement.

De préférence, le bouton d'entrainement présente une longueur L et le bouton d'entrainement est mobile sur une course supérieure à deux fois la longueur L.

Une telle disposition permet d'avoir au moins deux positions intermédiaires de réglage. Plus la course du bouton d'entrainement est importante, plus le nombre de positions intermédiaires de réglage peut être important.

Avantageusement, un plan P passant par l'axe Δ divise la couronne mobile en les premier et deuxième secteurs.

Ainsi, le levier de manoeuvre et le dispositif d'entrainement du système de mesure sont agencés de manière opposées autour de la couronne mobile, ce qui facilite leur implantation respective dans la machine

De préférence, la machine à café automatique comporte un système de commande relié au système de mesure de la position de la couronne mobile, le système de commande comportant un dispositif d'affichage et/ou d'alerte piloté par le système de mesure de la position de la couronne mobile et/ou le système de commande comportant un dispositif de commande du broyeur piloté par le système de mesure de la position de la couronne mobile.

Malgré la simplicité d'un réglage manuel de la granulométrie de la mouture, le système de commande de la machine à café informe et/ou assiste l'utilisateur en fonction de la granulométrie sélectionnée et de la boisson choisie. Le système de commande de la machine à café peut piloter le fonctionnement du broyeur en fonction de la granulométrie sélectionnée et de la boisson choisie. Ainsi, la machine à café automatique présente une mise en oeuvre simple et ergonomique.

Avantageusement, le dispositif d'affichage et/ou d'alerte du système de commande comporte un afficheur muni d'une zone destinée à afficher un indice représentatif de la granulométrie de la mouture réalisée par le broyeur à partir de la position de la couronne mobile déterminée par le système de mesure de la position de la couronne mobile.

L'utilisateur est informé de la granulométrie sélectionnée. Ainsi, une telle disposition permet de participer à l'apprentissage de l'utilisateur concernant la notion de granulométrie et à son impact sur la force du café en tasse.

De préférence, le dispositif d'affichage et/ou d'alerte du système de commande émet un signal visuel et/ou sonore si la boisson demandée par l'utilisateur n'est pas compatible avec la position de la couronne mobile déterminée par le système de mesure de la position de la couronne mobile.

Malgré la simplicité d'un réglage manuel de la granulométrie de la mouture, la machine à café assiste l'utilisateur en cas de mauvaise utilisation. Le dispositif d'alerte peut également suggérer la granulométrie optimum pour une boisson sélectionnée par l'utilisateur.

Avantageusement, le dispositif de commande du broyeur comporte une mémoire dans laquelle sont stockées des tables associant un temps de broyage et une quantité de mouture en fonction de la granulométrie déterminée par la position de la couronne mobile, le système de commande pilotant un temps de broyage du broyeur en fonction de la quantité de mouture nécessaire pour la boisson demandée et de la position de la couronne mobile déterminée par le système de mesure de la position de la couronne mobile caractérisant la granulométrie. De préférence, la machine à café automatique comporte un système de commande relié au système de mesure de la position de la couronne mobile, le système de commande comportant un afficheur muni d'une zone destinée à afficher un indice représentatif de la granulométrie de la mouture réalisée par le broyeur à partir de la position de la couronne mobile.

Pour produire une même quantité de mouture de café, le temps de broyage du broyeur sera plus court si la granulométrie de la mouture sélectionnée est grossière que si la granulométrie de la mouture sélectionnée est fine. Ainsi, une telle disposition permet au broyeur pour une boisson donnée de produire la même quantité de café quelle que soit la granulométrie sélectionnée.

L'invention sera mieux comprise à l'étude du mode de réalisation pris à titre nullement limitatif et illustré dans les figures annexées dans lesquelles :
[Fig. 1] La figure 1 illustre une vue en perspective d'une machine à café automatique munie d'un broyeur de grains de café selon un mode particulier de réalisation de l'invention.
[Fig. 2] La figure 2 illustre une vue en perspective écorchée de la machine à café automatique selon une direction II, illustrée sur la figure 1.
[Fig. 3] La figure 3 illustre une vue du dessus du broyeur de la machine à café automatique illustrée sur la figure 2.
[Fig. 4] La figure 4 illustre une vue en coupe selon la ligne IV-IV du broyeur de la machine à café automatique illustrée sur la figure 2.

On notera que, dans ce document, les termes «horizontal», «vertical», «inférieur», «supérieur», «longitudinal», «transversal», «haut», «bas», employés pour décrire la machine à café automatique font référence à cette machine reposant sur un plan de travail, en situation d'usage.

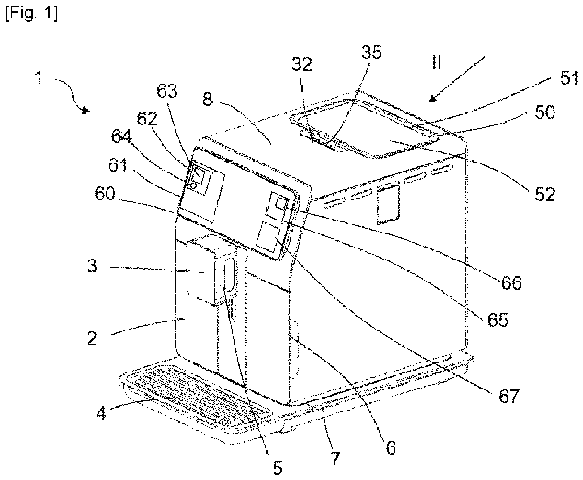

Dans l'exemple de réalisation représenté aux figures 1 à 2, une machine à café automatique 1 comporte un bâti 6 muni d'une base 7 destinée à reposer sur un plan de travail. La machine à café automatique 1 comporte un réservoir 2 formant une alimentation en eau froide, un dispositif d'infusion muni d'une chambre d'infusion (non représentés sur les figures) alimentée en mouture de café par un broyeur 10 à grains de café. La machine à café automatique 1 comporte un piston presseur (non représenté sur les figures) comprimant la mouture dans la chambre d'infusion pour former une galette de mouture. La machine à café automatique 1 comporte une tête de distribution 3 du café (Fig.1) qui comprend des sorties de café reliées à la chambre d'infusion et agencée au-dessus d'un repose tasse 4. La tête de distribution 3 comporte également un dispositif de moussage de lait 5. La tête de distribution 3 est montée mobile en translation verticale pour permettre à un utilisateur d'ajuster la position des sorties de café à la hauteur de la tasse. La machine à café automatique 1 comporte un bac à grains de café 50 agencé au-dessus du broyeur 10, au niveau d'une paroi supérieure 8 du bâti 2 Le bac à grains de café 50 comporte une ouverture 51 supérieure de chargement des grains de café. L'ouverture 51 supérieure est recouverte par un couvercle 52 amovible.

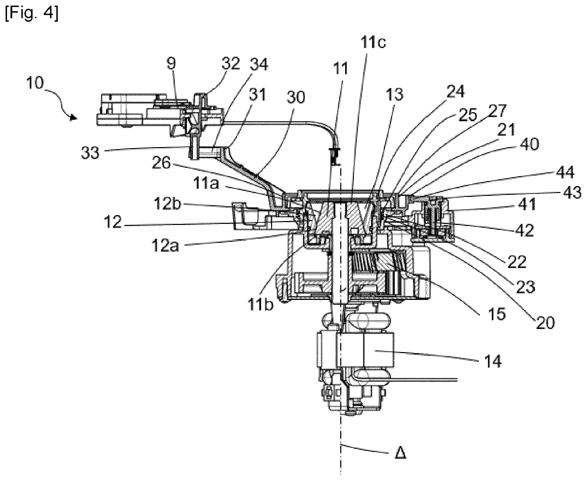

Tel que visible à la figure 4, Le broyeur 10 comprend une première meule 11 et une seconde meule 12 dans laquelle est engagée la première meule 11. La première meule 11 comporte une paroi 11a de forme conique orientée vers le haut, c'est-à-dire avec une grande base 11b disposée du côté inférieur et une petite base 11c disposée du côté supérieur. La seconde meule 12 comprend une première paroi 12a de forme conique orientée vers le haut et une seconde paroi 12b de forme conique orientée vers le bas par rapport à la première paroi 12a. La seconde paroi 12b forme avec la paroi 11a de la première meule 11 une zone de réception 13 en forme d'entonnoir dans laquelle sont disposés les grains de café issus du bac à grains de café 50, tandis que la première paroi 12a est espacée de quelques centaines de microns par rapport à la paroi 11a de la première meule 11, cet espacement pouvant être modifié. De préférence, l'espacement varie entre 100 µm et 600 µm. Les parois 11a, 12a et 12 b sont munies de dentures pour entrainer et broyer les grains de café.

La première meule 11 est entraînée en rotation selon un axe Δ au moyen d'un moteur 14 et d'un système de transmission 15 de type pignon et roue dentée, comme l'illustre la figure 4. Cette rotation de la première meule 11 par rapport à la seconde meule 12 permet le broyage des grains de café dans l'espacement (non illustré en détail) généré entre la première paroi 12a de la seconde meule 12 et la paroi 11a de la première meule 11.

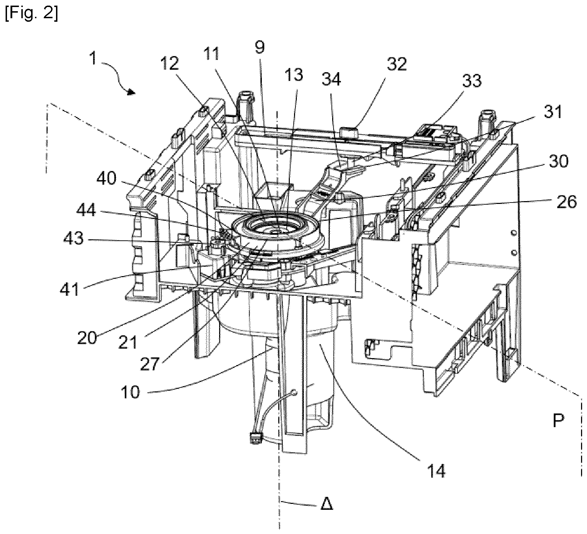

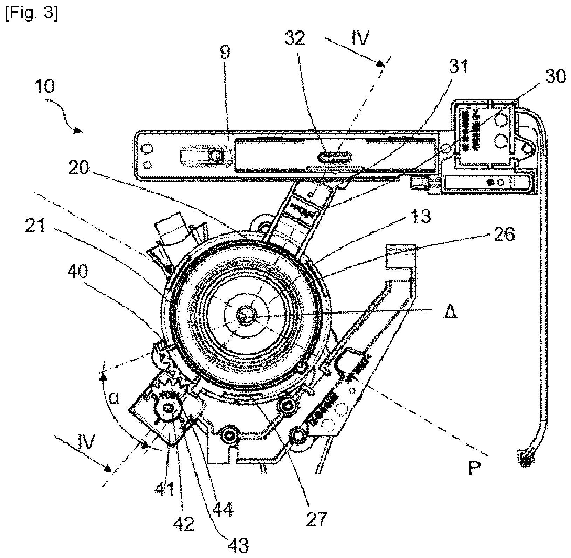

La seconde meule 12 est entrainée en translation dans le long de l'axe Δ au moyen d'un dispositif de réglage 20 de l'espacement entre les première 11 et seconde 12 meules, illustré sur les figures 2 à 4. Le dispositif de réglage 20 comporte une couronne 21 mobile le long de l'axe Δ entre une position serrée dans laquelle les première 11 et seconde 12 meules présentent un espacement faible pour produire une mouture d'une granulométrie fine et une position espacée dans laquelle les première 11 et seconde 12 meules présentent un espacement important pour produire une mouture d'une granulométrie grossière. La couronne 21 est montée en rotation selon l'axe Δ et est assujettie à une bague externe 22 munie d'un taraudage 23 qui reçoit un filetage 25 d'une bague interne 24. La bague interne 24 est montée en liaison glissière selon l'axe Δ et est assujettie à la seconde meule 12. La couronne 20 mobile présente une périphérie divisée angulairement en des premier 26 et deuxième 27 secteurs, le premier secteur 26 comportant un levier 30 manoeuvré manuellement. La manoeuvre du levier 30 met en rotation la couronne 21 mobile pour entraîner la translation de la seconde meule 12 selon l'axe Δ et ainsi régler l'espacement entre les première 11 et seconde 12 meules. Le levier 30 peut être manoeuvré pour mettre en rotation la couronne 21 mobile dans le sens horaire de rapprochement des première 11 et seconde 12 meules vers la position serrée ou dans le sens antihoraire d'éloignement des première 11 et seconde 12 meules vers la position espacée.

Tel que visible aux figures 2 et 4, le levier 30 comporte une extrémité libre 31 qui coopère avec un bouton 32 monté mobile en translation sur le bâti 6. Le bâti 6 comporte une traverse 9 sur laquelle coulisse le bouton 32. Le bouton 32 comporte un doigt 33 qui coopère avec une rainure 34 agencée sur l'extrémité libre 31 du levier 30. La rainure 34 forme une fourchette munie de deux dents sur lesquelles le doigt 33 agit pour déplacer l'extrémité libre 31 du levier 30.

Le bac à grains de café est agencé au-dessus de la zone de réception 13 et au-dessus de la couronne 21 mobile. L'ouverture 51 du bac à grains de café 50 et le couvercle 52 présentent chacun une forme rectangulaire (Fig.1). Le bouton 32 est agencé sur la paroi supérieure 8 du bâti 6, le long d'un côté de la forme rectangulaire, dans une partie centrale de la paroi supérieure 8. Le levier 30 s'étend sous le bac à grains de café 50 à partir de la couronne 21 mobile jusqu'au bouton 32. Le bouton 32 d'entrainement présente une longueur L égale à 1,5 centimètres et le bouton 32 d'entrainement est mobile sur une course égale à 6 centimètres. La paroi supérieure 8 comporte une règle graduée 35 munie de repères qui est agencée le long de la course du bouton 32. Chaque repère correspond à une position de la couronne 21 mobile qui définit une granulométrie de la mouture réalisée par le broyeur 10. La règle graduée 35 comporte 6 repères, par exemple de 1 à 6, le repère 1 correspondant à la position serrée et le repère 6 correspondant à la position espacée.

Le deuxième secteur 26 de la couronne 21 mobile comporte un dispositif d'entrainement 40 d'un système de mesure 41 de la position de la couronne 21 mobile entre la position serrée et la position espacée. Le système de mesure de la couronne mobile est formé par un potentiomètre 41 rotatif qui comporte un axe 42 muni d'un pignon 43. Le dispositif d'entrainement 40 du potentiomètre comporte un secteur denté 44. Le secteur denté 44 s'étend sur un secteur angulaire α à la périphérie de la couronne 21 mobile égal à 30°. Le potentiomètre 41 est agencé sur le broyeur 10, dans une partie arrière du bâti 6.

Tel que visible à la figure 2, un plan P passant par l'axe Δ divise la couronne 21 mobile en les premier 26 et deuxième 27 secteurs. Le premier secteur 26 est orienté vers l'avant de la machine à café automatique 1 et le deuxième secteur 27 est orienté vers l'arrière de la machine à café automatique 1.

La machine à café automatique 1 comporte un système de commande 60 pour la commande et la gestion des cycles de préparation des boissons infusées, notamment du café. Le potentiomètre 41 est relié au système de commande 60. Le potentiomètre 41 émet un signal qui caractérise une position de la couronne 21 mobile et par conséquent un espacement des première 11 et seconde 12 meules qui définit une granulométrie de la mouture réalisée par le broyeur 10.

Le système de commande 60 comporte un dispositif d'affichage et d'alerte 61 muni d'un afficheur 62. L'afficheur 62 comporte une zone 63 destinée à afficher un indice représentatif de la granulométrie de la mouture réalisée par le broyeur 10 à partir de la position de la couronne 21 mobile déterminée par le potentiomètre 41. Le dispositif d'affichage et d'alerte 61 comporte un avertisseur sonore 64. Le dispositif d'affichage et d'alerte 61 émet un signal visuel et sonore si la boisson demandée par l'utilisateur n'est pas compatible avec la granulométrie sélectionnée avec le bouton 32. L'afficheur 62 fait clignoter l'indice représentatif de la granulométrie de la mouture et l'avertisseur sonore 64 émet une succession de sons.

Le système de commande 60 comporte un dispositif de commande 65 du broyeur 10 qui est relié au potentiomètre 41. Le dispositif de commande 65 du broyeur 10 comporte une mémoire 66 dans laquelle sont stockées des tables associant un temps de broyage et une quantité de mouture en fonction de la granulométrie.

En fonction de la boisson demandée et la granulométrie sélectionnée, le système de commande 60 pilote un temps de broyage du broyeur 10 déterminé à partir des tables entrées dans la mémoire 66.

De manière avantageuse, le système de commande 60 comporte un dispositif de mesure 67 de l'épaisseur de la galette de mouture comprimée représentative de la quantité de mouture introduite dans la chambre d'infusion. L'épaisseur de la galette de mouture est calculée à partir de la mesure de la position de tassage du piston presseur dans la chambre d'infusion. Un tel dispositif est décrit par exemple dans le brevet EP2737833. Ainsi, en fonction de la boisson demandée, de la granulométrie sélectionnée et de l'épaisseur de la galette de mouture mesurée pour la dernière boisson/granulométrie réalisée, le système de commande 60 détermine et pilote un temps de broyage du broyeur 10.

En fonctionnement, l'utilisateur qui veut réaliser par exemple un café espresso vérifie sur l'afficheur 62 la granulométrie choisie. Si la granulométrie est trop grossière, il déplace le bouton 32 sur une position « granulométrie fine ». Le déplacement du bouton 32 entraine la couronne 21 mobile qui réduit l'espacement entre les première 11 et deuxième 12 meules. Le secteur denté 44 entraine le pignon 43 et l'axe 42 du potentiomètre 41 pour indiquer au système de commande 60 la position « granulométrie fine » de la mouture générée par le broyeur 10. L'afficheur 62 indique alors la nouvelle granulométrie sélectionnée. L'utilisateur lance à l'aide du système de commande 60 un espresso. A partir des tables stockées dans la mémoire 66, le dispositif de commande 65 du broyeur 10 détermine que pour alimenter la chambre d'infusion avec 7 grammes de café avec une granulométrie fine, le temps de broyage est égal à 8 secondes. Le système de commande 60 met alors en marche le broyeur 10 pendant ce temps de broyage égal à 8 secondes.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, l'ouverture 51 du bac à grains 50 est circulaire et le bouton 32 d'entrainement du levier 30 est mobile en rotation le long d'un arc de cercle agencé à proximité de l'ouverture 51.

## Revendications

1. Machine à café automatique (1) comprenant un broyeur (10) de grains de café comportant des première (11) et seconde (12) meules dont l'une (11) est mobile en rotation autour d'un axe Δ par rapport à l'autre (12) et un dispositif de réglage (20) de l'espacement entre les première (11) et seconde (12) meules le long de l'axe Δ du type vis/écrou, ledit dispositif de réglage (20) comportant une couronne (21) mobile le long de l'axe Δ entre une position serrée dans laquelle les première (11) et seconde (12) meules présentent un espacement faible pour produire une mouture d'une granulométrie fine, et une position espacée dans laquelle les première (11) et seconde (12) meules présentent un espacement important pour produire une mouture d'une granulométrie grossière, **caractérisée en ce que** la couronne (21) mobile présente une périphérie divisée angulairement en des premier (26) et deuxième (27) secteurs, le premier secteur (26) comportant un levier (30) manoeuvré manuellement et destiné à mettre en rotation la couronne (21) mobile pour régler l'espacement entre les première (11) et seconde (12) meules et le deuxième secteur (27) comportant un dispositif d'entrainement (40) d'un système de mesure (41) de la position de la couronne (21) mobile entre la position serrée et la position espacée.

2. Machine à café automatique (1) selon la revendication 1, **caractérisée en ce que** le dispositif d'entrainement (40) comporte un secteur denté (44) qui coopère avec un pignon (43) denté.

3. Machine à café automatique (1) selon la revendication 2, **caractérisée en ce que** le secteur denté (44) s'étend sur au moins 30°.

4. Machine à café automatique (1) selon l'une quelconque des revendications 1 à 3, **caractérisée en ce que** le système de mesure comporte un potentiomètre (41).

5. Machine à café automatique (1) selon l'une quelconque des revendications 1 à 4, **caractérisée en ce qu'**elle comporte une paroi supérieure (8) comportant une ouverture (51) d'un bac à grains de café (50) et un bouton (32) d'entrainement d'une extrémité libre (31) du levier (30), le bouton (32) d'entrainement étant agencé à proximité de l'ouverture (51).

6. Machine à café automatique (1) selon la revendication 5, **caractérisée en ce que** le bouton (32) d'entrainement est mobile en translation.

7. Machine à café automatique (1) selon la revendication 6, **caractérisée en ce que** le bouton (32) d'entrainement présente une longueur L et le bouton (32) d'entrainement est mobile sur une course supérieure à deux fois la longueur L.

8. Machine à café automatique (1) selon l'une quelconque des revendications 1 à 7, **caractérisée en ce qu'**un plan P passant par l'axe Δ divise la couronne (21) mobile en les premier (26) et deuxième (27) secteurs

9. Machine à café automatique (1) selon l'une quelconque des revendications 1 à 8, **caractérisée en ce qu'**elle comporte un système de commande (60) relié au système de mesure (41) de la position de la couronne (21) mobile, le système de commande (60) comportant un dispositif d'affichage et/ou d'alerte (61) piloté par le système de mesure (41) de la position de la couronne (21) mobile et/ou le système de commande (60) comportant un dispositif de commande (65) du broyeur (10) piloté par le système de mesure (41) de la position de la couronne (21) mobile.

10. Machine à café automatique (1) selon la revendication 9, **caractérisée en ce que** le dispositif d'affichage et/ou d'alerte (61) du système de commande (60) comporte un afficheur (62) muni d'une zone destinée à afficher un indice représentatif de la granulométrie de la mouture réalisée par le broyeur (10) à partir de la position de la couronne (21) mobile déterminée par le système de mesure (41) de la position de la couronne (21) mobile.

11. Machine à café automatique (1) selon l'une quelconque des revendications 9 à 10, **caractérisée en ce que** le dispositif d'affichage et/ou d'alerte (61) du système de commande (60) émet un signal visuel et/ou sonore si la boisson demandée par l'utilisateur n'est pas compatible avec la position de la couronne (21) mobile déterminée par le système de mesure (41) de la position de la couronne (21) mobile.

12. Machine à café automatique (1) selon l'une quelconque des revendications 9 à 11, **caractérisée en ce que** le dispositif de commande (65) du broyeur (10) comporte une mémoire (66) dans laquelle sont stockées des tables associant un temps de broyage et une quantité de mouture en fonction de la granulométrie déterminée par la position de la couronne (21) mobile, le système de commande (60) pilotant un temps de broyage du broyeur (10) en fonction de la quantité de mouture nécessaire pour la boisson demandée et de la position de la couronne (21) mobile déterminée par le système de mesure (41) de la position de la couronne (21) mobile caractérisant la granulométrie.

## Patentansprüche

1. Automatische Kaffeemaschine (1), umfassend einen Kaffeebohnenmahler (10), der einen ersten (11) und einen zweiten (12) Mahlstein umfasst, von denen der eine (11) in Bezug auf den anderen (12) um eine Achse Δ drehbeweglich ist, und eine Regelungsvorrichtung (20) für den Abstand zwischen dem ersten (11 ) und dem zweiten (12) Mahlstein entlang der Achse Δ vom Typ Schraube/Schraubenmutter, wobei die Regelungsvorrichtung (20) eine Krone (21) umfasst, die entlang der Achse Δ beweglich ist zwischen einer engen Position, bei der der erste (11) und der zweite (12) Mahlstein einen geringen Abstand aufweisen, um ein Mahlgut mit feiner Granulometrie zu erzeugen, und einer beabstandeten Position, bei der der erste (11) und der zweite (12) Mahlstein einen großen Abstand aufweisen, um ein Mahlgut mit grober Granulometrie zu erzeugen, **dadurch gekennzeichnet, dass** die bewegliche Krone (21) einen winklig in einen ersten (26) und einen zweiten (27) Sektor unterteilten Umfang aufweist, wobei der erste Sektor (26) einen Hebel (30) umfasst, der manuell bedient wird und dazu vorgesehen ist, die bewegliche Krone (21) in Drehung zu versetzen, um den Abstand zwischen dem ersten (11) und dem zweiten (12) Mahlstein zu regeln, und wobei der zweite Sektor (27) eine Antriebsvorrichtung (40) für ein Messsystem (41) der Position der beweglichen Krone (21) zwischen der engen Position und der beabstandeten Position umfasst.

2. Automatische Kaffeemaschine (1) nach Anspruch 1, **dadurch gekennzeichnet, dass** die Antriebsvorrichtung (40) einen gezahnten Sektor (44) umfasst, der mit einem gezahnten Ritzel (43) zusammenwirkt.

3. Automatische Kaffeemaschine (1) nach Anspruch 2, **dadurch gekennzeichnet, dass** der gezahnte Sektor (44) sich über mindestens 30° erstreckt.

4. Automatische Kaffeemaschine (1) nach einem der Ansprüche 1 bis 3, **dadurch gekennzeichnet, dass** das Messsystem ein Potentiometer (41) umfasst.

5. Automatische Kaffeemaschine (1) nach einem der Ansprüche 1 bis 4, **dadurch gekennzeichnet, dass** sie eine obere Wand (8) umfasst, die eine Öffnung (51) für ein Kaffeebohnenfach (50) und eine Antriebstaste (32) für ein freies Ende (31) des Hebels (30) umfasst, wobei die Antriebstaste (32) in der Nähe der Öffnung (51) eingerichtet ist.

6. Automatische Kaffeemaschine (1) nach Anspruch 5, **dadurch gekennzeichnet, dass** die Antriebstaste (32) verschiebbar ist.

7. Automatische Kaffeemaschine (1) nach Anspruch 6, **dadurch gekennzeichnet, dass** die Antriebstaste (32) eine Länge L aufweist und die Antriebstaste (32) über eine Weglänge beweglich ist, die mehr als das Zweifache der Länge L beträgt.

8. Automatische Kaffeemaschine (1) nach einem der Ansprüche 1 bis 7, **dadurch gekennzeichnet, dass** eine Ebene P, die durch die Achse Δ verläuft, die bewegliche Krone (21) in den ersten (26) und den zweiten (27) Sektor unterteilt.

9. Automatische Kaffeemaschine (1) nach einem der Ansprüche 1 bis 8, **dadurch gekennzeichnet, dass** sie ein Steuersystem (60) umfasst, das mit dem Messsystem (41) der Position der beweglichen Krone (21) verbunden ist, wobei das Steuersystem (60) eine Anzeige- und/oder Warnvorrichtung (61) umfasst, die von dem Messsystem (41) der Position der beweglichen Krone (21) gesteuert wird, und/oder wobei das Steuersystem (60) eine Steuervorrichtung (65) des Mahlers (10) umfasst, die von dem Messsystem (41) der Position der beweglichen Krone (21) gesteuert wird.

10. Automatische Kaffeemaschine (1) nach Anspruch 9, **dadurch gekennzeichnet, dass** die Anzeige- und/oder Warnvorrichtung (61) des Steuersystems (60) einen Anzeiger (62) umfasst, der mit einem Bereich ausgestattet ist, der dazu vorgesehen ist, einen Index anzuzeigen, der repräsentativ ist für der Granulometrie des Mahlguts, die ausgehend von der Position der beweglichen Krone (21), die von dem Messsystem (41) der Position der beweglichen Krone (21) bestimmt wird, von dem Mahler (10) ausgeführt wird.

11. Automatische Kaffeemaschine (1) nach einem der Ansprüche 9 bis 10, **dadurch gekennzeichnet, dass** die Anzeige- und/oder Warnvorrichtung (61) des Steuersystems (60) ein visuelles und/oder akustisches Signal ausgibt, falls das von dem Benutzer angefragte Getränk nicht mit der Position der beweglichen Krone (21) vereinbar ist, die von dem Messsystem (41) der Position der beweglichen Krone (21) bestimmt wird.

12. Automatische Kaffeemaschine (1) nach einem der Ansprüche 9 bis 11, **dadurch gekennzeichnet, dass** die Steuervorrichtung (65) des Mahlers (10) einen Speicher (66) umfasst, in dem Tabellen gespeichert sind, die eine Zeit zum Mahlen und eine Mahlgutmenge in Abhängigkeit von der Granulometrie, die von der Position der beweglichen Krone (21) bestimmt wird, verknüpft, wobei das Steuersystem (60) eine Zeit zum Mahlen des Mahlers (10) in Abhängigkeit von der für das angefragte Getränk erforderlichen Mahlgutmenge und von der Position der beweglichen Krone (21) steuert, die von dem Messsystem (41) der Position der beweglichen Krone (21) bestimmt wird, die die Granulometrie kennzeichnet.

## Claims

1. Automatic coffee machine (1) comprising a coffee bean grinder (10) comprising first (11) and second (12) grinding wheels one (11) of which is mobile in rotation along an axis Δ relative to the other (12) and an adjusting device (20) for adjusting the distance between the first (11) and second (12) grinding wheels along the axis Δ of the screw/nut type, said adjustment device (20) comprising a movable crown (21) that moves along the axis Δ between a clamping position wherein the first (11) and second (12) grinding wheels have a small spacing to produce a fine-grained ground powder, and a spaced position wherein the first (11) and second (12) grinding wheels have a large spacing to produce a coarse-grained ground powder, **characterised in that** the movable crown (21) has a periphery angularly divided into first (26) and second (27) sectors, the first sector (26) comprising a manually operated lever (30) and for rotating the movable crown (21) to adjust the spacing between the first (11) and second (12) grinding wheels and the second sector (27) comprising a drive device (40) for driving a system for measuring (41) the position of the movable crown (21) between the clamped position and the spaced position.

2. Automatic coffee machine (1) according to claim 1, **characterised in that** the drive device (40) comprises a sector gear (44) that cooperates with a pinion gear (43).

3. Automatic coffee machine (1) according to claim 2, **characterised in that** the sector gear (44) extends over at least 30°.

4. Automatic coffee machine (1) according to any of claims 1 to 3, **characterised in that** the measuring system comprises a potentiometer (41).

5. Automatic coffee machine (1) according to any of claims 1 to 4, **characterised in that** it comprises an upper wall (8) comprising an opening (51) of a coffee bean container (50) and a button (32) for driving a free end (31) of the lever (30), the drive button (32) being arranged near the opening (51).

6. Automatic coffee machine (1) according to claim 5, **characterised in that** the drive button (32) is movable in translation.

7. Automatic coffee machine (1) according to claim 6, **characterised in that** the drive button (32) has a length L and the drive button (32) is mobile over a course of travel greater than twice the length L.

8. Automatic coffee machine (1) according to any of claims 1 to 7, **characterised in that** a plane P passing through the axis Δ divides the movable crown (21) into the first (26) and second (27) sectors.

9. Automatic coffee machine (1) according to any of claims 1 to 8, **characterised in that** it comprises a control system (60) connected to the system for measuring (41) the position of the movable crown (21), the control system (60) comprising a display and/or alert device (61) controlled by the system for measuring (41) the position of the movable crown (21) and/or the control system (60) comprising a device for controlling (65) the grinder (10) controlled by the system for measuring (41) the position of the movable crown.

10. Automatic coffee machine (1) according to claim 9, **characterised in that** the display and/or alert device (61) of the control system (60) comprises a display (62) provided with a zone intended to display an index that represents the grain of the ground powder made by the grinder (10) from the position of the movable crown (21) determined by the system for measuring (41) the position of the movable crown (21).

11. Automatic coffee machine (1) according to any of claims 9 to 10, **characterised in that** the display and/or alert device (61) of the control system (60) emits a visual and/or audible signal if the beverage requested by the user is not compatible with the position of the movable crown (21) determined by the system for measuring (41) the position of the movable crown (21).

12. Automatic coffee machine (1) according to any of claims 9 to 11, **characterised in that** the device for controlling (65) the grinder (10) comprises a memory (66) wherein are stored tables that associate a grinding time and a quantity of ground powder according to the grain determined by the position of the movable crown (21), the control system (60) controlling a grinding time of the grinder (10) according to the quantity of ground powder required for the beverage requested and the position of the movable crown (21) determined by the system for measuring (41) the position of the movable crown (21) characterising the grain.
